# EUROPEAN PATENT APPLICATION

(11) **EP 4 621 372 A1**
(43) Date of publication of application: **24.09.2025**
(21) Application number: 24205899.8
(22) Date of filing: 10.10.2024
(51) Int. Cl.: G01L 19/14

(54) **INFORMATION COLLECTION DEVICE AND BATTERY PACK**

(30) Priority: 19.03.2024 CN 202420538621 U
(71) Applicant: Eve Power Co., Ltd., Jingmen, Hubei 448000 (CN)
(72) Inventor: LIU, Liangliang, Jingmen, Hubei 448000 (CN); YUAN, Dingding, Jingmen, Hubei 448000 (CN); FANG, Zhenxing, Jingmen, Hubei 448000 (CN)
(74) Representative: Murgitroyd & Company

(57) **Abstract**

An information collection device includes a casing, an air pressure sensor, and a sealing member. The casing has a first installation hole, the air pressure sensor is installed inside the casing, and at least a part of the air pressure sensor is snap-fitted into the first installation hole to acquire an air pressure parameter outside the casing. The sealing member seals the first installation hole, and the sealing member is used to allow gas to pass through and prevent liquid from passing through. Thereby, the information collection device is arranged in the battery cell, enabling it to collect information in an environment of electrolyte, thus mitigating the technical problems of complex structure and insufficient reliability of the cover plate of the battery cell caused by the external arrangement of the prior art information collection device.

## Description

### TECHNICAL FIELD

The present disclosure relates to the field of battery technologies, and in particular to an information collection device and a battery pack.

### BACKGROUND

In the related art, the collection of internal information of a battery cell is typically done adopting a scheme of an external collection device, where the collection device is arranged outside the battery cell, with the collection terminal of the device insulatedly penetrating into the interior of the battery cell, to achieve information collection. However, this approach requires modification to the cover plate and the like of the battery cell, increasing the complexity of the cover plate and posing a risk of reducing the reliability of the cover plate.

### SUMMARY

Embodiments of the present disclosure provide an information collection device and a battery pack, both of which may improve the sealing performance of the information collection device; the information collection device can be arranged inside the battery cell, which mitigates the technical problems of complex structure and insufficient reliability of the cover plate of the battery cell caused by the external arrangement of the prior art information collection device.

In a first aspect, embodiments of the present disclosure provide an information collection device, which includes:
a casing having a first installation hole;
an air pressure sensor installed inside the casing, at least a part of the air pressure sensor being snap-fitted into the first installation hole to acquire an air pressure parameter outside the casing; and
a sealing member sealing the first installation hole, the sealing member being used to allow gas to pass through and prevent liquid from passing through.

In an embodiment, the air pressure sensor includes:
a base; and
a sidewall disposed on a peripheral of the base, enclosing an installation cavity with the base, an end portion of the sidewall away from the base extending into the first installation hole.

The base is equipped with an air pressure chip, the base is suitable for installation of a circuit board, the air pressure chip is electrically connected to the circuit board, and a gel layer and a sealing layer are sequentially provided in the installation cavity along a direction away from the base.

In an embodiment, a sealing plate is provided in the first installation hole to close a pathway therethrough, the sealing plate has a first air hole, wherein the sidewall is snap-fitted into the first installation hole, and the end portion of the sidewall away from the base abuts against the sealing plate.

In an embodiment, the sealing plate has a contacting portion extending towards the air pressure sensor, the contacting portion and a wall surface of the first installation hole are spaced apart and a groove is formed therebetween, the end of the sidewall away from the base has a stepped surface, the sidewall is snap-fitted into the groove, and the stepped surface abuts against the contacting portion.

In an embodiment, the sealing member includes a first gas-permeable membrane, the first gas-permeable membrane is connected to an outer surface of the casing and seals the first air hole.

In an embodiment, the sealing member includes a second gas-permeable membrane and a second sealing cover, the second sealing cover has a second air hole, the second sealing cover is snap-fitted into the first installation hole, and the second gas-permeable membrane is connected to the second sealing cover and seals the second air hole.

In an embodiment, an outer surface of the casing has a sealing groove, the first installation hole is formed in a bottom surface of the sealing groove, wherein the bottom surface of the sealing groove also has a connecting part, the connecting part is spaced apart from the first installation hole, and the connecting part has a central hole and a notch in communication with the central hole, the notch faces the first installation hole.

The second sealing cover is snap-fitted into the sealing groove, and the second air hole corresponds to a position of the central hole.

In an embodiment, the information collection device further includes:
one or more temperature sensors, the casing having one or more second installation holes corresponding to the one or more temperature sensors in a one-to-one correspondence, each second installation hole being connected to a fourth sealing cover in the second installation hole, the fourth sealing cover having a connecting hole, an end of a corresponding one of the one or more temperature sensors being located inside the casing, another end of the corresponding temperature sensor extending out of the casing from the connecting hole to acquire a temperature parameter outside the casing.

In an embodiment, a portion of the corresponding temperature sensor passing through the connecting hole is configured to connect to a heat dissipation plate, and the heat dissipation plate is connected to and located between two adjacent winding cores.

In an embodiment, a portion of the corresponding temperature sensor passing through the connecting hole has a plurality of temperature collection points and is also provided with a pressure sensing unit.

In an embodiment, the casing has a glue injection hole and an exhaust hole that are spaced apart, the glue injection hole is configured such that an adhesive is injected into the casing through the glue injection hole, the exhaust hole is configured such that air is expelled from the casing through the exhaust hole during injection of the adhesive, wherein the glue injection hole is sealed by a first sealing part, and the exhaust hole is sealed by a second sealing part.

In an embodiment, the information collection device further includes a circuit board disposed inside the casing, the air pressure sensor is installed on the circuit board, the circuit board has a signal transmission unit thereon, and the signal transmission unit is used for wirelessly sending parameter information to a terminal.

In an embodiment, the information collection device further includes a battery disposed inside the casing, and the circuit board has an installation bracket connected to the battery.

In an embodiment, the installation bracket includes a first connecting plate and a second connecting plate that are disposed opposite to each other, the first connecting plate has a third connecting plate bent towards the second connecting plate, the third connecting plate is electrically connected to the circuit board, the second connecting plate has a fourth connecting plate extending towards the circuit board, and the fourth connecting plate is electrically connected to the circuit board. The battery is clamped between the first connecting plate and the second connecting plate.

In a second aspect, embodiments of the present disclosure provide a battery pack, which includes the above-mentioned information collection device.

Embodiments of the present disclosure have following benefits.

In the embodiments of the present disclosure, the air pressure sensor is installed inside the casing and at least part of the air pressure sensor is snap-fitted into the first installation hole to acquire the air pressure parameter outside the casing, and thus the information collection is achieved. Since the sealing member seals the first installation hole, the casing has a good sealing performance, such that the information collection device is arranged in the battery cell. Since the sealing member is permeable for gas but not for liquid, the air pressure sensor can acquire the air pressure parameter outside the casing through the gas passing through the sealing member, thus achieving the collection of the air pressure parameter. Therefore, the information collection device may perform information collection in an environment of electrolyte, thereby mitigating the technical problems of complex structure and insufficient reliability of the cover plate of the battery cell caused by the external arrangement of the prior art information collection device.

### BRIEF DESCRIPTION OF THE DRAWINGS

To more clearly illustrate the technical solutions in the embodiments of the present disclosure, the accompanying drawings required in the description of the embodiments will be briefly introduced below, and it is obvious that the drawings in the following description are only some of the embodiments of the present disclosure. For those skilled in the art, other drawings can be obtained based on according to these drawings, without any creative effort.
FIG. 1 is a perspective schematic diagram of an information collection device provided in embodiments of the present disclosure;
FIG. 2 is an exploded view of an information collection device provided in embodiments of the present disclosure;
FIG. 3 is a cross-sectional view of an air pressure sensor provided in embodiments of the present disclosure;
FIG. 4 is a structural schematic diagram of a casing provided in embodiments of the present disclosure;
FIG. 5 is an enlarged view of the area A in FIG. 4; and
FIG. 6 is another structural schematic diagram of a casing provided in embodiments of the present disclosure.

### Drawing reference numbers:

10. casing; 110. first installation hole; 120. second installation hole; 130. glue injection hole; 140. exhaust hole; 150. first sealing part; 160. second sealing part; 170. sealing groove; 180. connecting part; 190. central hole; 1100. notch; 1110. detection area; 1120. sealing plate; 1130. first air hole; 1140. contacting portion; 1150. groove; 20. air pressure sensor; 210. base; 220. sidewall; 230. air pressure chip; 240. electrical connection part; 30. temperature sensor; 410. gel layer; 420. sealing layer; 430. first gas-permeable membrane; 440. fourth sealing cover; 450. connecting hole; 460. second sealing cover; 470. second air hole; 50. circuit board; 60. installation bracket; 610. first connecting plate; 620. second connecting plate; 630. third connecting plate; 640. fourth connecting plate; 70. battery.

### DETAILED DESCRIPTION

The technical solutions in the embodiments of the present disclosure will be described clearly and completely below in conjunction with the accompanying drawings in the embodiments of the present disclosure, and it is obvious that the embodiments described are only some of the embodiments of the present disclosure, and not all of them. Based on the embodiments of the present disclosure, all other embodiments obtained by those skilled in the art without creative efforts fall within the scope of protection of the present disclosure. In addition, it will be understood that the specific embodiments described herein are only for the purpose of illustrating and explaining the present disclosure and are not intended to limit the present disclosure. In the present disclosure, unless otherwise stated, directional terms such as "top" and "bottom" usually refer to the top and bottom in the actual use or working state of a device, specifically the direction in the drawing, and "inside" and "outside" refer to the outline of the device.

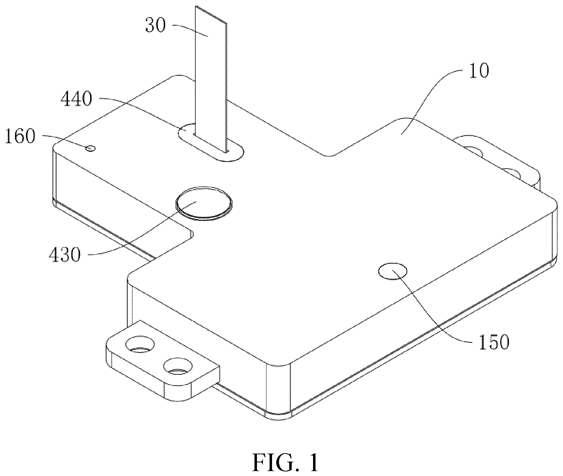

Refer to FIGS. 1 to 6, embodiments of the present disclosure provide an information collection device, which includes a casing 10, an air pressure sensor 20 and a sealing member. The casing 10 has a first installation hole 110. The air pressure sensor 20 is installed inside the casing 10, and at least a part of the air pressure sensor 20 is snap-fitted into the first installation hole 110 to acquire an air pressure parameter outside the casing 10. The sealing member seals the first installation hole 110, and the sealing member is used to allow gas to pass through and prevent liquid from passing through.

In the embodiments, the air pressure sensor 20 is installed inside the casing 10 and at least the part of the air pressure sensor 20 is snap-fitted into the first installation hole 110 to acquire the air pressure parameter outside the casing 10, and thus the information collection is achieved. Since the sealing member seals the first installation hole 110, the casing 10 has a good sealing performance, such that the information collection device is arranged in the battery cell. Since the sealing member can allow the gas to pass through and block the flow of liquid, the air pressure sensor 20 can acquire the air pressure parameter outside the casing 10 through the gas passing through the sealing member, thus achieving the collection of the air pressure parameter. Therefore, the information collection device may perform information collection in an environment of electrolyte, thereby mitigating the technical problems of complex structure and insufficient reliability of the cover plate of the battery cell caused by the external arrangement of the prior art information collection device.

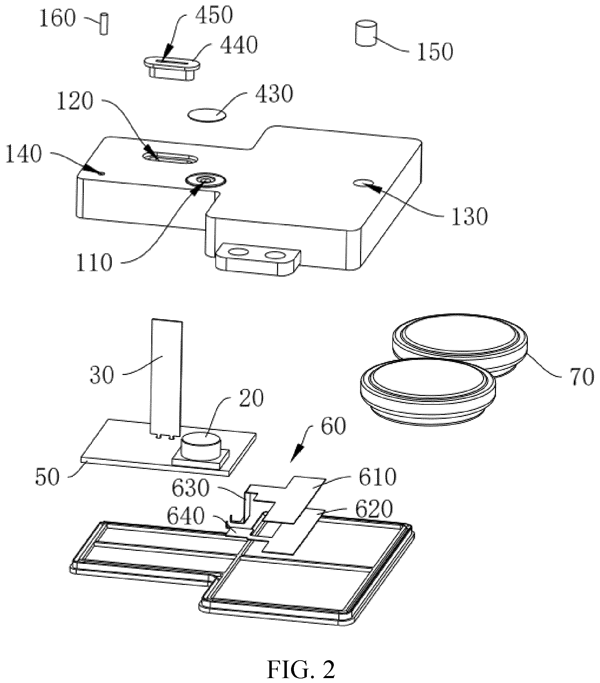

As shown in FIG. 2, in some embodiments, the casing 10 includes a shell and a bottom cover, the shell is formed with a cavity, an opening of which is downward, and the bottom cover is arranged at the lower side of the shell and seals the opening of the cavity. The first installation hole 110 may be formed at the side of the shell away from the bottom cover.

As shown in FIG. 2, in some embodiments, the edge of the bottom cover facing the shell has a stepped surface, and the bottom cover is snap-fitted to the shell based on the stepped surface, achieving the connection between the bottom cover and the shell. In this manner, the casing 10 has simple structures, making it easy to install and directly compatible with the existing main battery cell assembly line.

In some embodiments, ultrasonic welding may also be adopted for sealing after the bottom cover and the shell snap together, which ensures the sealing between the bottom cover and the shell. Alternatively, a sealing ring may be provided at the connection between the shell and the bottom cover to ensure the sealing therebetween.

The information collection device is particularly suitable for installation inside the battery cell. The information collection device is located between an upper plate and a winding core inside the battery cell and is located in proximity to the positive pole, the negative pole or the non-metallic sealing member. The interior of the battery cell is filled with the electrolyte, and the sealing based on the sealing member may prevent the electrolyte from permeating into the casing 10 and causing damage to the information collection device.

Since the information collection device is located inside the battery cell, the information collection device is particularly suitable for collecting the operating parameters of the battery cell, thereby providing real-time feedback of the parameters inside the battery cell.

Since the information collection device is arranged inside the battery cell, the casing 10 needs to have a good corrosion resistance. In the embodiments, the casing 10 is formed by injection molding with polyethylene terephthalate (PET), polypropylene (PP), amino-terminated polyoxypropylene (PEA), and other corrosion-resistant material, thus ensuring the corrosion resistance of the casing 10.

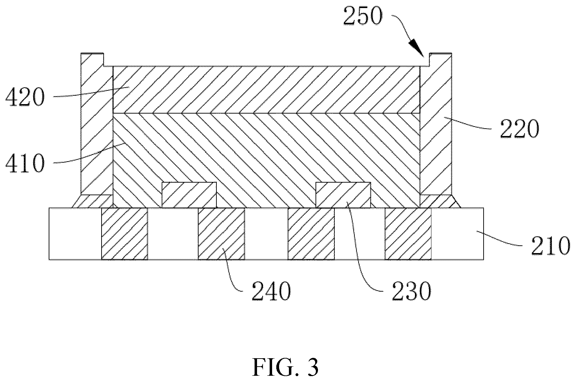

As shown in FIGS. 2 and 3, in some embodiments, the air pressure sensor 20 includes a base 210 and a sidewall 220. The sidewall 220 is disposed on a peripheral of the base 210, enclosing an installation cavity with the base 210. An end portion of the sidewall 220 away from the base 210 extends into the first installation hole 110. The base 210 is equipped with air pressure chip(s) 230, and the base 210 is suitable for installation on a circuit board 50. The air pressure chip(s) 230 are electrically connected to the circuit board 50, and a gel layer 410 and a sealing layer 420 are sequentially provided in the installation cavity along a direction away from the base 210.

It will be understood that, after the information collection device is arranged inside the battery cell, the air pressure sensors 20 can acquire the air pressure parameter of the inside of the battery cell, thereby achieving the collection of air pressure information.

As shown in FIG. 3, the base 210 of the air pressure sensor 20 is used for the installation of the chips 230, so that the air pressure parameter of the inside of the battery cell is acquired by the chips 230 in a manner of sensing. By providing the installation cavity with the gel layer 410 and the sealing layer 420 in sequence, the installation cavity is sealed and protected.

The outer surface of the sidewall 220 abuts against the wall surface of the first installation hole 110, and the outer surface of the sidewall 220 is bonded to the wall surface of the first installation hole 110 with sealing adhesive to ensure the sealing at the connection between the sidewall 220 and the casing 10. The gel layer 410 and the sealing layer 420 filled inside the sidewall 220 can prevent gas corrosion and protect the air pressure sensor 20.

The sidewall 220 and the base 210 may be integrally molded. The sidewall 220 is annular in shape, allowing it to adapt to the shape and size of the first installation hole 110.

The base 210 may be provided with several electrical connection parts 240, and the electrical connection between the chips 230 and the circuit board 50 may be achieved through the electrical connection parts 240.

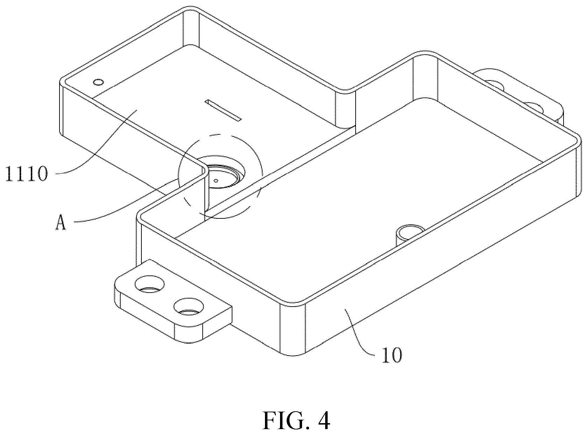

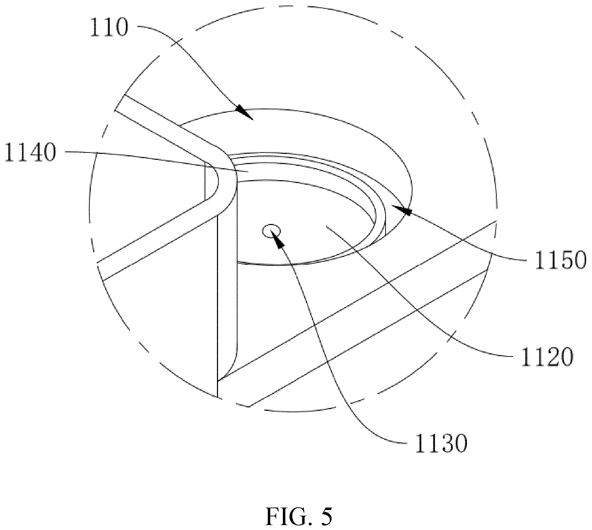

As shown in FIGS. 4 and 5, in some embodiments, a sealing plate 1120 is provided in the first installation hole 110 to close a pathway through the first installation hole 120, and the sealing plate 1120 has a first air hole 1130. The sidewall 220 is snap-fitted into the first installation hole 110, and the end portion of the sidewall 220 away from the base 210 abuts against the sealing plate 1120.

The casing 10 has a detection area 1110 and a power supply installation area. The thickness of the portion of the casing 10 at the detection area 1110 is greater than the thickness of the portion of the casing 10 at the power supply installation area. The first installation hole 110 is constructed in the detection area 1110, so that the first installation hole 110 has a certain depth. Since the first installation hole 110 has the certain depth, the sidewall 220 may be snap-fitted into the first installation hole 110, achieving the connection between the sidewall 220 and the first installation hole 110.

The first installation hole 110 is closed by the sealing plate 1120 therein, and thus a gap space may be formed between the sealing plate 1120 and the sealing layer 420. Since the first air hole 1130 is disposed in the sealing plate 1120, the gap space can be in communication with the external space of the casing 10 through the first air hole 1130, achieving the acquisition of the air pressure parameter.

Due to the design of the sealing plate 1120, the air pressure sensor 20 can also be prevented from protruding through the first installation hole 110, and the sealing plate 1120 plays the role of position limitation during assembly.

The sealing plate 1120 and the casing 10 are integrally molded. In a case where the first installation hole 110 is a circular hole, the sealing plate 1120 is a circular plate, and the sidewall 220 is in a cylindrical shape.

As shown in FIG. 5, in some embodiments, the sealing plate 1120 has a contacting portion 1140 extending towards the air pressure sensor 20. The contacting portion 1140 and the wall surface of the first installation hole 110 are spaced apart and a groove 1150 is formed therebetween. The end portion of the sidewall 220 away from the base 210 has a stepped surface, the sidewall 220 is snap-fitted into the groove 1150 with the stepped surface abutting against the contacting portion 1140.

The sealing layer 420 is flush with the stepped surface, so that a portion of the sidewall 220 will be snap-fitted into the groove 1150 when the sidewall 220 is snap-fitted into the first installation hole 110. The stepped surface of the sidewall 220 abuts against the contacting portion 1140, so that the gap space can be formed between the sealing layer 420 and the sealing plate 1120. The gap space is in communication with the external space of the casing 10 through the first air hole 1130, achieving the acquisition of the air pressure parameter.

As shown in FIGS. 1 and 2, in some embodiments, the sealing member includes a first gas-permeable membrane 430. The first gas-permeable membrane 430 is connected to an outer surface of the casing 10 and seals the first air hole 1130. The first gas-permeable membrane 430 is used to allow gas to pass through but block the flow of liquid.

It will be understood that the first gas-permeable membrane 430 is a semi-permeable membrane, which allows gas to pass through but blocks the flow of liquid. Thereby, when the information collection device in the embodiments is arranged inside the battery cell, the electrolyte will not be allowed to pass through the first gas-permeable membrane 430, preventing the electrolyte from entering the air pressure sensor 20, and achieving air pressure detection.

The first gas-permeable membrane 430 may be connected to the outer surface of the casing 10 by soldering or in other method.

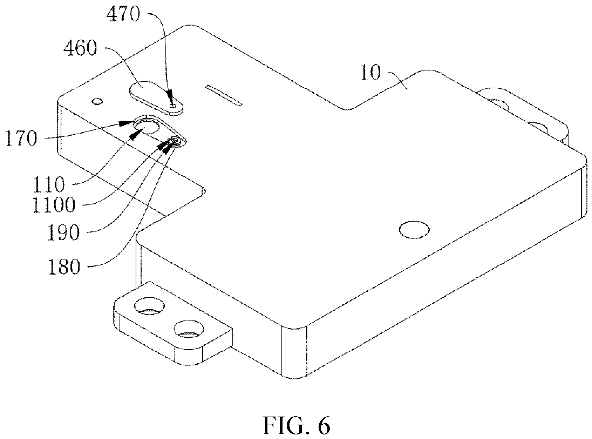

As shown in FIG. 6, in some embodiments, the sealing member includes a second gas-permeable membrane and a second sealing cover 460, the second sealing cover 460 has a second air hole 470. The second sealing cover 460 is snap-fitted into the first installation hole 110, the second gas-permeable membrane is connected to the second sealing cover 460 and seals the second air hole 470. The second gas-permeable membrane is used to allow gas to pass through but block flow of liquid.

It will be understood that the second gas-permeable membrane is a semi-permeable membrane, which allows gas to pass through but blocks the flow of liquid. Thereby, when the information collection device in the embodiments is arranged inside the battery cell, the electrolyte will not be allowed to pass through the second gas-permeable membrane, preventing the electrolyte from entering the air pressure sensor 20, and achieving air pressure detection.

The second gas-permeable membrane may be connected to the outer surface of the second sealing cover 460 by soldering or in other method.

Since the second sealing cover 460 is snap-fitted into and seals the first installation hole 110 and the second gas-permeable membrane is arranged on the second sealing cover 460, less second gas-permeable membrane may be used, thereby saving the raw materials of the second gas-permeable membrane.

After being snap-fitted into the first installation hole 110, the second sealing cover 460 may further be fixed to the casing 10 by bonding, ultrasonic welding, or in other method to ensure a reliable connection and the sealing reliability of the second sealing cover 460.

In some embodiments, the outer surface of the casing 10 has a sealing groove 170, and the first installation hole 110 is formed in a bottom surface of the sealing groove 170. The bottom surface of the sealing groove 170 also has a connecting part 180, and the connecting part 180 and the first installation hole 110 are spaced apart. The connecting part 180 has a central hole 190 and a notch 1100 in communication with the central hole 190, and the notch 1100 faces the first installation hole 110. The second sealing cover 460 is snap-fitted into the sealing groove 170, and the second air hole 470 corresponds to a position of the central hole 190.

The second air hole may be in communication with the space where the air pressure sensor 20 is located through the central hole 190, the notch 1100 and the internal space of the sealing groove 170, and thus the air pressure parameter can be acquired. Based on the above arrangement, when the external second gas-permeable membrane fails or there is a sealing failure, which causes some liquid to enter the sealing groove 170, the liquid may be located in the area on either side of the sealing groove 170, allowing the central hole 190 and the notch 1100 always in communication with the space of the air pressure sensor 20 and the external space, and thus preventing the situation where air pressure parameter cannot be acquired.

As shown in FIGS. 1 and 2, in some embodiments, the information collection device further includes a temperature sensor 30. The casing 10 has a second installation hole 120, and the second installation hole 120 is connected to a fourth sealing cover 440 in the second installation hole 120. The fourth sealing cover 440 has a connecting hole 450, one end of the temperature sensor 30 is located inside the casing 10, and the other end of the temperature sensor 30 extends out of the casing 10 from the connecting hole 450 to acquire a temperature parameter outside the casing 10.

It will be understood that, after the information collection device is arranged inside the battery cell, the temperature sensor 30 can acquire the internal temperature parameter of the battery cell, achieving temperature information collection.

The connecting hole 450 of the fourth sealing cover 440 is used to allow the temperature sensor 30 passing through, so that one end of the temperature sensor 30 is located inside the casing 10 and electrically connected to the circuit board 50, and the other end of the temperature sensor 30 extends out of the casing 10 from the connecting hole 450 to acquire the internal temperature of the battery cell.

In some embodiments, a portion of the temperature sensor 30 that passes through the connecting hole 450 is configured to connect to a heat dissipation plate, which is connected to and located between two adjacent winding cores.

It will be understood that, the heat dissipation plate is connected to the two adjacent winding cores, and thus the temperature of the heat dissipation plate may basically correspond to the average temperature of the two adjacent winding cores due to heat conduction. Since the portion of the temperature sensor 30 that passes through the connecting hole 450 is connected to the heat dissipation plate, the temperature sensor 30 can directly acquire the temperature of the heat dissipation plate, which reflects the average temperature of the two adjacent winding cores, thereby achieving the acquisition of the temperature parameter.

In some embodiments, one heat dissipation plate may be arranged on a side of each of the two winding cores facing one another, the temperature sensor 30 is made to extend to and between the two heat dissipation plates to acquire the temperature between the two heat dissipation plates, which reflects the average temperature of the two adjacent winding cores, thereby achieving the acquisition of the temperature parameter.

In some embodiments, the second installation hole 120 and the first installation hole 110 are spaced apart, so that the air pressure parameter and temperature parameter are acquired at two different locations of the casing 10.

In some embodiments, the fourth sealing cover 440 is not only snap-fitted into and installed in the second installation hole 120, but also bonded to the second installation hole 120, so that the fourth sealing cover 440 and the casing 10 form good seal.

The temperature sensor 30 may be in a shape with a small thickness such as a sheet or a film. For example, the temperature sensor 30 can be a thermistor, a thermal probe, or the like. The connecting hole 450 of the fourth sealing cover 440 is adapted to the temperature sensor 30 in size. Since the temperature sensor 30 needs to pass through the connecting hole 450, the size of the connecting hole 450 is at least slightly larger than the size of the temperature sensor 30. The gap between the connecting hole 450 and the temperature sensor 30 may be sealed by adhesive in the subsequent glue-injection process to ensure the sealing at the connection between the temperature sensor 30 and the fourth sealing cover 440.

In some embodiments, the portion of the temperature sensor 30 that passes through the connecting hole 450 has a plurality of temperature collection points and is also provided with a pressure sensing unit.

It will be understood that, the plurality of temperature collection points may achieve multipoint temperature measurement to improve the accuracy of temperature measurement. The integration of the pressure sensing unit at the protruding portion of the temperature sensor 30 allows the temperature sensor 30 to perform pressure measurement, thereby enriching the functions of the temperature sensor 30.

Each of the plurality of temperature collection points is provided with a temperature collection unit to acquire the temperature parameter at the point. The plurality of temperature collection points may be evenly spaced apart along the length direction of the temperature sensor 30. Alternatively, the plurality of temperature collection points may be randomly distributed on the temperature sensor 30.

In some embodiments, the casing 10 may also have multiple second installation holes 120 each connected to one fourth sealing cover 440, and allowing a corresponding temperature sensor 30 to pass through. Thereby, multiple temperature sensors 30 are used to measure the external temperature parameters, improving the accuracy of temperature measurement. It will be appreciated that the multiple temperature sensors 30 may measure temperatures at different depths and positions inside the battery cell, thereby accurately reflecting the internal temperature parameters of the battery cell.

In some embodiments, multiple information collection devices may be arranged inside the battery cell to measure the temperatures at different depths and positions inside the battery cell, thereby accurately reflecting the internal temperature parameters of the battery cell.

Referring to FIG. 2, in some embodiments, the casing 10 has a glue injection hole 130 and an exhaust hole 140 that are spaced apart. The glue injection hole 130 is configured for injection of an adhesive into the casing 10 through the glue injection hole 130, and the exhaust hole 140 is configured to allow air to be expelled from the casing 10 during the injection of the adhesive. The glue injection hole 130 is sealed by a first sealing part 150, and the exhaust hole 140 is sealed by a second sealing part 160.

It will be understood that, since the adhesive is injected into the casing 10 through the glue injection hole 130, not only a reliable connection is formed between the components inside the casing 10, but also the casing 10 is sealed by the adhesive and is insulated and protected through the adhesive.

Since the interior of the casing 10 will continue to be filled with the adhesive during the glue-injection process, to ensure the balance of the internal pressure of the casing 10 and to make sure that the casing 10 can be successfully filled with the adhesive, the exhaust hole 140 is arranged in the casing 10 to balance the internal pressure during the glue-injection process. After the glue-injection process is finished, the first sealing part 150 is inserted into the glue injection hole 130 to seal the glue injection hole 130, and the second sealing part 160 is inserted into the exhaust hole 140 to seal the exhaust hole 140.

The first sealing part 150 and the second sealing part 160 may each be arranged in a cylindrical shape. The first sealing part 150 is snap-fitted into the glue injection hole 130 and is bonded to the glue injection hole 130 under the action of the adhesive. The second sealing part 160 is snap-fitted into the exhaust hole 140 and is bonded to the exhaust hole 140 under the action of the adhesive.

With continued reference to FIG. 2, in some embodiments, the information collection device further includes the circuit board 50. The circuit board 50 is located inside the casing 10, with the air pressure sensor 20 and the temperature sensor 30 installed on the circuit board 50. The circuit board 50 has a signal transmission unit configured to wirelessly send parameter information to the terminal. Since the circuit board 50 is arranged, and the air pressure sensor 20 and the temperature sensor 30 are electrically connected to the circuit board 50, the installation of the sensors is achieved. The air pressure sensor 20 and the temperature sensor(s) 30 acquire the internal operating parameters such as the air pressure parameter(s) and the temperature parameter(s), and then the signal transmission unit of the circuit board 50 may send the parameter signals to the terminal for real-time recording, display, etc.

The signal transmission unit may be a Bluetooth antenna. The terminal may be a mobile terminal such as a smartphone, an iPad, a vehicle display, or a fixed terminal such as a computer or monitor. It will be understood that, the terminal has a signal reception unit, such as a signal receiver, which is compatible with the signal transmission unit to achieve signal reception at the terminal. The terminal also has a signal processing unit, such as a processor, to process, store, and display information of the signals.

As shown in FIG. 2, in some embodiments, the circuit board 50 has an installation bracket 60 for connection with the battery 70. By arranging the installation bracket 60 for connection with the battery 70, the information collection device does not consume the electrical energy of the battery cell.

The traditional external information collection device draws power from the battery cell, and consumes the electrical energy of the battery cell. Since the information collection device itself has power consumption and has issues like reliability, it may affect the reliability of the battery cell while increasing power consumption, leading to problems such as battery failure and high selfdischarge. Compared with the traditional external information collection device, the information collection device in the embodiments is directly powered by the battery 70 inside and does not draw power from the battery cell, and thus the information collection device does not consume the electrical energy of the battery cell, and there is no electrical connection between the information collection device and the battery cell. As a result, the aforementioned problems are avoided.

It will be understood that, since the battery 70 is arranged inside the casing 10 for independent power supply, it avoids the risk to the battery cell due to the failure of the collection circuit(s) of the information collection device, ensuring the reliability of the battery cell.

In some embodiments, the battery 70 may be a highly reliable and long-life lithium battery 70, which has properties of being compact and long-lasting, such as a lithium-manganese dioxide battery 70, a lithium thionyl chloride battery 70, and any other metal lithium battery 70. The number of the battery 70 may be set to one, two or more. When multiple batteries 70 are provided, the batteries 70 may be connected in parallel or in series on the installation bracket 60. For example, two batteries 70 are provided, and the two batteries 70 are connected in parallel on the installation bracket 60.

In some embodiments, the battery 70 may be a pouch battery 70, a stainless steel casing battery 70, etc. The soldering terminals or battery tabs of the battery 70 are led outside, so that the positive and negative electrodes of the battery 70 are connected to the circuit board 50 for power supply.

As shown in FIG. 2, in some embodiments, the installation bracket 60 includes a first connecting plate 610 and a second connecting plate 620 that are disposed opposite to each other. The first connecting plate 610 has a third connecting plate 630 bent towards the second connecting plate 620, and the third connecting plate 630 is electrically connected to the circuit board 50. The second connecting plate 620 has a fourth connecting plate 640 extending towards the circuit board 50, and the fourth connecting plate 640 is electrically connected to the circuit board 50. The battery 70 is clamped between the first connecting plate 610 and the second connecting plate 620.

The first connecting plate 610 and the second connecting plate 620 are spaced apart and the battery 70 is clamped therebetween. The first connecting plate 610 is electrically connected to the circuit board 50 via the third connecting plate 630, and the second connecting plate 620 is electrically connected to the circuit board 50 through the fourth connecting plate 640. Thereby, the battery 70 can supply power to the circuit board 50 through the first connecting plate 610, the second connecting plate 620, the third connecting plate 630, and the fourth connecting plate 640, enabling the sensors and other components on the circuit board 50 to operate normally.

The spacing between the first connecting plate 610 and the second connecting plate 620 may be reasonably set according to the thickness of the battery 70. The spacing between the first connecting plate 610 and the second connecting plate 620 is slightly less than the thickness of the battery 70 to ensure that the battery 70 can be stably clamped and fixed between the first connecting plate 610 and the second connecting plate 620.

The lengths of the first connecting plate 610 and the second connecting plate 620 may be reasonably set according to the number of the batteries 70. For example, when two batteries 70 are provided and arranged in parallel, the lengths of the first connecting plate 610 and the second connecting plate 620 are both greater than the sum of the diameters of the two batteries 70.

The first connecting plate 610, the second connecting plate 620, the third connecting plate 630 and the fourth connecting plate 640 are all conductive metal plates. For example, the first connecting plate 610, the second connecting plate 620, the third connecting plate 630 and the fourth connecting plate 640 are plates made of copper. The first connecting plate 610 and the third connecting plate 630 are integrally formed, and the second connecting plate 620 and the fourth connecting plate 640 are integrally formed.

In another aspect, embodiments of the present disclosure provide a battery pack. The battery pack includes the information collection device as described in the embodiments above.

In the embodiments, the air pressure sensor 20 is installed inside the casing 10 and at least a part of the air pressure sensor 20 is snap-fitted into the first installation hole 110 to acquire the air pressure parameter outside the casing 10, and thus the information collection is achieved. Since the sealing member seals the first installation hole 110, the casing 10 has a good sealing performance, such that the information collection device is arranged in the battery cell. Since the sealing member is permeable for gas but not for liquid, the air pressure sensor 20 can acquire the air pressure parameter outside the casing 10 through the gas passing through the sealing member, thus achieving the collection of the air pressure parameter. Therefore, the information collection device may perform information collection in an environment of electrolyte, thereby mitigating the technical problems of complex structure and insufficient reliability of the cover plate of the battery cell caused by the external arrangement of the prior art information collection device.

The information collection device is located between the upper flat plate and the winding core inside the battery cell and is located in proximity to the positive pole, the negative pole or the non-metallic sealing member. The interior of the battery cell is filled with the electrolyte, and the sealing based on the sealing member may prevent the electrolyte from permeating into the casing 10 and causing damage to the information collection device.

The information collection device may also be arranged in other area inside the battery cell. For example, the information collection device may be arranged in an area inside the battery cell close to the bottom plate of the casing. For example, the information collection device may be arranged in an area inside the battery cell close to the cover plate of the casing. For example, the information collection device may be arranged in an area inside the battery cell close to the end plate of the casing. For example, the information collection device may be arranged in an area inside the battery cell close to the side plate of the casing.

The embodiments of the present disclosure are described above in detail, and specific examples are used herein to illustrate the principles and implementations of the present disclosure. The descriptions of the embodiments are only for the purpose of helping to understand the implementations and core ideas of the present disclosure. In addition, for those skilled in the art, based on the ideas of the present disclosure, there will be changes in specific implementations and the scope of the application. In summary, the content of the specification should not be construed as a limitation of the present disclosure.

## Claims

1. An information collection device, **characterized in that** the information collection device comprises:
a casing (10) having a first installation hole (110);
an air pressure sensor (20) installed inside the casing (10), at least a part of the air pressure sensor (20) being snap-fitted to the first installation hole (110) to acquire an air pressure parameter outside the casing (10); and
a sealing member sealing the first installation hole (110), wherein the sealing member is used to allow gas to pass through and prevent liquid from passing through.

2. The information collection device according to claim 1, **characterized in that** the air pressure sensor (20) comprises:
a base (210); and
a sidewall (220) disposed on a peripheral of the base (210), enclosing an installation cavity with the base (210), an end portion of the sidewall (220) away from the base (210) extending into the first installation hole (110);
wherein the base (210) is equipped with an air pressure chip (230), the base (210) is suitable for installation of a circuit board (50), the air pressure chip (230) is electrically connected to the circuit board (50), and a gel layer (410) and a sealing layer (420) are sequentially provided in the installation cavity along a direction away from the base (210).

3. The information collection device according to claim 2, **characterized in that** a sealing plate (1120) is provided in the first installation hole (110) to close a pathway therethrough, the sealing plate (1120) has a first air hole (1130), wherein the sidewall (220) is snap-fitted into the first installation hole (110), and the end portion of the sidewall (220) away from the base (210) abuts against the sealing plate (1120).

4. The information collection device according to claim 3, **characterized in that** the sealing plate (1120) has a contacting portion (1140) extending towards the air pressure sensor (20), the contacting portion (1140) and a wall surface of the first installation hole (110) are spaced apart and a groove (1150) is formed therebetween, the end portion of the sidewall (220) away from the base (210) has a stepped surface, the sidewall (220) is snap-fitted into the groove (1150) with the stepped surface abutting against the contacting portion (1140).

5. The information collection device according to claim 3, **characterized in that** the sealing member comprises a first gas-permeable membrane (430), the first gas-permeable membrane (430) is connected to an outer surface of the casing and seals the first air hole (1130).

6. The information collection device according to claim 1, **characterized in that** the sealing member comprises a second gas-permeable membrane and a second sealing cover (460), the second sealing cover (460) has a second air hole (470), wherein the second sealing cover (460) is snap-fitted into the first installation hole (110), and the second gas-permeable membrane is connected to the second sealing cover (460) and seals the second air hole (470).

7. The information collection device according to claim 6, **characterized in that** an outer surface of the casing (10) has a sealing groove (170), the first installation hole (110) is formed in a bottom surface of the sealing groove (170), wherein the bottom surface of the sealing groove (170) also has a connecting part (180), the connecting part (180) is spaced apart from the first installation hole (110), and the connecting part (180) has a central hole (190) and a notch (1100) in communication with the central hole (190), the notch (1100) faces the first installation hole (110);
the second sealing cover (460) is snap-fitted into the sealing groove (170), and the second air hole (470) corresponds to a position of the central hole (190).

8. The information collection device according to any one of claims 1 to 7, **characterized in that** the information collection device further comprises:
one or more temperature sensors (30), wherein the casing (10) has one or more second installation holes (120) corresponding to the one or more temperature sensors (30) in a one-to-one correspondence, each second installation hole (120) is connected to a fourth sealing cover (440) in the second installation hole (120), the fourth sealing cover (440) has a connecting hole (450), an end of a corresponding one of the one or more temperature sensors (30) is located inside the casing (10), another end of the corresponding temperature sensor (30) extends out of the casing (10) from the connecting hole (450) to acquire a temperature parameter outside the casing (10).

9. The information collection device according to claim 8, **characterized in that** a portion of the corresponding temperature sensor (30) passing through the connecting hole (450) is configured to connect to a heat dissipation plate, and the heat dissipation plate is connected to and located between two adjacent winding cores.

10. The information collection device according to claim 8, **characterized in that** a portion of the corresponding temperature sensor (30) passing through the connecting hole (450) has a plurality of temperature collection points and is also provided with a pressure sensing unit.

11. The information collection device according to any one of claims 1 to 7, **characterized in that** the casing (10) has a glue injection hole (130) and an exhaust hole (140) that are spaced apart, the glue injection hole (130) is configured such that an adhesive is injected into the casing (10) through the glue injection hole (130), the exhaust hole (140) is configured such that air is expelled from the casing (10) through the exhaust hole (140) during injection of the adhesive, wherein the glue injection hole (130) is sealed by a first sealing part (150), and the exhaust hole (140) is sealed by a second sealing part (160).

12. The information collection device according to any one of claims 1 to 7, **characterized in that** the information collection device further comprises a circuit board (50) disposed inside the casing (10), wherein the air pressure sensor (30) is installed on the circuit board (50), the circuit board (50) has a signal transmission unit thereon, and the signal transmission unit is used for wirelessly sending parameter information to a terminal.

13. The information collection device according to claim 12, **characterized in that** the information collection device further comprises a battery (70) disposed in the casing (10), wherein the circuit board (50) has an installation bracket (60) connected to the battery (70).

14. The information collection device according to claim 13, **characterized in that** the installation bracket (60) comprises a first connecting plate (610) and a second connecting plate (620) that are disposed opposite to each other, the first connecting plate (610) has a third connecting plate (630) bent towards the second connecting plate (620), the third connecting plate (630) is electrically connected to the circuit board (50), the second connecting plate (620) has a fourth connecting plate (640) extending towards the circuit board (50), and the fourth connecting plate (640) is electrically connected to the circuit board (50); the battery (70) is clamped between the first connecting plate (610) and the second connecting plate (620).

15. A battery pack, **characterized in that** the battery pack comprises the information collection device according to any one of claims 1 to 14.
